Europäisches Patentamt

European Patent Office

Office européen des brevets

(11) Publication number: **0 213 768**
**A2**

## (12) EUROPEAN PATENT APPLICATION

(21) Application number: 86305967.1

(22) Date of filing: 01.08.86

(51) Int. Cl.⁴: **G 08 C 19/02**

(30) Priority: 12.08.85 US 764915

(43) Date of publication of application:
11.03.87 Bulletin 87/11

(84) Designated Contracting States:
DE FR GB IT SE

(71) Applicant: THE BABCOCK & WILCOX COMPANY
1010 Common Street P.O. Box 60035
New Orleans Louisiana 70160(US)

(72) Inventor: Sterling, Edward Lee, Jr.
3380 Warren Road
CLeveland Ohio 44111(US)

(72) Inventor: Thompson, William Lee
15364 GAR Highway
Montville Ohio 44064(US)

(74) Representative: Cotter, Ivan John et al,
D. YOUNG & CO. 10 Staple Inn
London WC1V 7RD(GB)

(54) On-line serial communication interfaces.

(57) An on-line serial communication interface (24) effects interfacing between a digital circuit or communication device, such as a computer or hand held terminal, and a current loop which has lines for connecting a transmitter (10) to a power supply (16). The interface includes a diode (D1) connected in series with one of the lines (14) of the current loop. The diode (D1) is connected in parallel to a source and drain (34,36) of a field effect transistor (F1). A control gate (38) of the FET is connected to an output of a differential amplifier (32) which receives, at one input thereof, a digital voltage pulse signal from the digital circuit. Another input of the amplifier (32) is held at a selected voltage so that voltage pulses are outputted from the amplifier (32) when the digital circuit generates its voltage pulses. This turns the field effect transistor (F1) on and off in synchronism with the voltage pulses, thus cutting the diode (D1) in and out of series with the line (14). With the field effect transistor (F1) in its non-conducting off condition, the diode (D1) has a small voltage drop thereacross. This does not affect the current on the current loop. With the field effect transistor (F1) conducting and in its on state, the diode (D1) is cut out and its voltage drop is applied to the transmitter (10) which is connected to the current loop. Communication can thus be established with the transmitter (10) while avoiding any interruption in the current on the current loop.

FIG. 2

## ON-LINE SERIAL COMMUNICATION INTERFACES

This invention relates to on-line serial communication interfaces.

Two-wire analog transmission systems are known. Such systems include a transmitter which is connected to a power supply by two wires which form a current loop. The transmitter includes, as at least one of its features, a transducer which senses a condition such as pressure or temperature. This condition is known as a process variable (PV).

The power supply is connected to the two wires to close the current loop. It is also known to provide a resistor in the current loop. The transmitter amplifies the signal from its transducer and this amplified signal is used to draw a certain current from the power supply which is proportional or otherwise related to the process variable. It is known to draw from a minimum of 4 mA to a maximum of 20 mA. The current between 4 and 20 mA passes through the resistor to produce a voltage drop across the resistor. This voltage drop can be measured to give a value for the process variable.

It is noted that the 4 mA minimum current is required to energise the circuitry of the transmitter. Any excess current above this 4 mA level is taken as a value which can be used to determine the process variable.

It is known that such 4-20 mA two-wire systems have an accuracy which is limited to around 0.1% at best. These systems are also essentially unidirectional with the transmitter being essentially uncontrolled and transmitting continuously.

The transmitter in such circuits are generally limited in accuracy to about 0.1% and their functionality is limited to only continuous reading and sensing of the process variable.

According to one aspect of the invention there is provided an on-line serial communication interface for interfacing between a digital circuit operable to generate voltage pulses and a current loop comprising lines for connecting a transmitter to a power supply to drain current from the power supply according to a process variable sensed by the transmitter, the interface comprising:

a diode connected in series in one of the lines of the current loop for establishing a voltage drop across the diode;

a field effect transistor having a source and drain connected in parallel with the diode, the field effect transistor having a gate for receiving a voltage to render the field effect transistor conductive between its source and drain to short the diode to prevent it from applying its voltage drop to the one line; and

a differential amplifier having an output connected to the gate of the field effect transistor, and two inputs, one of the inputs of the amplifier being connected to the digital circuit for receiving the generated voltage pulses and the other input of the amplifier being connected or connectable to a selected voltage whereby the amplifier output develops voltage pulses in synchronism with the generated voltage pulses from the digital circuit to render the field effect transistor conductive and non-conductive in synchronism with the voltage pulses.

According to a second aspect of the present invention there is provided an on-line serial communication interface for a digital circuit such as a computer or hand held terminal, which digital circuit generates voltage pulses, to a current loop having lines for connecting a transmitter to a power supply for drawing current from the power supply according to a process variable sensed by the transmitter, the interface comprising a diode connected in series in one of the lines of the current loop for establishing a voltage drop on the one line, a field effect transistor (FET) having a source and drain connected in parallel to the diode, the FET having a gate for receiving a voltage to render the FET conductive between its source and drain to short out the diode from the one line so as to apply the voltage drop to the transmitter connected to the one line, and a differential amplifier having an output connected to the FET gate and having two inputs, one of the inputs being connected to the digital circuit for receiving the pulses and the other input being connected to a selected constant voltage whereby the amplifier outputs voltage pulses which are applied to the FET gate for cutting the diode in and out of the one line, also in pulses.

A preferred embodiment of the present invention described hereinbelow utilises microprocessor technology to improve the overall accuracy and expand the functionality of transmitter devices. The preferred embodiment provides an apparatus for interfacing a computer or hand held terminal with a current loop for digital communication to the two-wire transmitter while the transmitter is still on-line (sending analog information) to a controller or some monitoring device. The preferred embodiment provides a serial communication interface between a current loop and a digital circuit which is simple in design, rugged in construction and economical to manufacture.

The invention will now be further described, by way of illustrative and non-limiting example, with reference to the accompanying drawing, in which:

Figure 1 is a block diagram showing a known current loop having a communication device such as a computer or hand held terminal connected to the current loop; and

Figure 2 is a schematic diagram of an on-line serial communication interface embodying the invention connected between the communication device and the current loop.

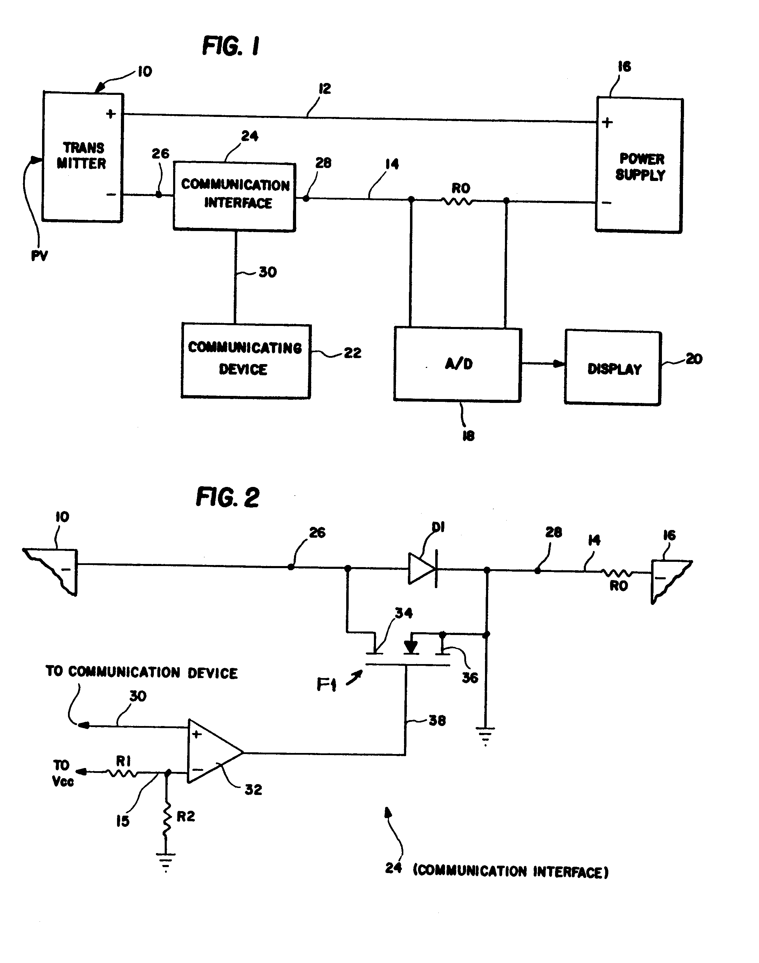

The embodiment of the invention now to be described with reference to the drawing provides an on-line serial communication interface or interface unit 24 between a digital circuit, shown in Figure 1 as a communication or communicating device 22 such as an IBM PC, a Radio Shack Model 100 Lap Computer, or Termiflex Hand Held Terminal, and a current loop formed by a Bailey Controls Company smart transmitter 10, lines 12,14, and any 12 to 48 Vdc power supply 16. As is known, one of the lines, for example the line 14, may include a resistor R0, which has a voltage drop thereacross proportional to a current flowing in the lines 12,14. The transmitter 10 may include a transducer such as a pressure or temperature transducer (not shown) which receives a process variable PV. The transducer may be connected to a microprocessor in the transmitter 10 which controls the amount of current to be drawn from the power supply 16 on the lines 12 and 14.

The voltage drop across the resistor R0 is measured by an analog-to-digital converter 18. This voltage drop can be displayed on a display unit 20 as a measurement of the process variable PV.

The communication interface unit 24 is connected into the current loop line 14 at connection points 26 and 28. The interface unit 24 receives digital inputs from the communicating device 22 through a line 30. The communicating device 22 is a digital circuit such as a computer, microprocessor or hand held terminal. The device 22 sends digital information in the form of voltage pulses through the line 30 to the communication interface 24 which in turn establishes digital communication with the current loop.

Figure 2 illustrates the on-line serial communication interface 24 in more detail.

A diode D1 is connected in series with one of the lines 12,14 in the current loop of Figure 1, in this case the line 14 connected between negative terminals of the transmitter 10 and the power supply 16.

A field effect transistor (FET) F1 has a drain and a source 34,36 connected in parallel across the diode D1. A control gate 38 of the FET F1 is connected to an output of a differential amplifier 32. A non-inverting (positive) input of the amplifier 32 is connected to the line 30 of the communicating device 22 for receiving the train of voltage pulses. An inverting (negative) input of the amplifier 32 is connected to a constant voltage $V_{cc}$ on a line 15 via a voltage divider or resistor bridge R1,R2. The constant voltage at the inverting (negative) terminal of the amplifier 32 is compared with the voltage on the line 30. When a digital voltage pulse is applied to the line 30 from the communicating device 22, the output of the amplifier 32 also generates a voltage pulse which is applied to the gate 38 of the FET F1. In this way, the diode D1 is short circuited from the line 14 in pulses. A pulsed digital signal thus appears on the line 14 at the transmitter 10. This signal is superimposed on any analog current signal which is being transmitter by the transmitter 10. When the communicating device 22 is not transmitting any voltage pulse, the diode D1 remains in series with the line 14.

The signal from the communicating device 22 is a serial RS-232C signal, which is sent one bit at a time. A logic high on this line is between 3 and 12 volts, and a logic low is between -3 and -12 volts. This assumes that the communicating device 22 is a computer or hand held terminal. Without any signal from the communicating device 22, an earth potential is applied to the non-inverting input of the amplifier 32 over the line 30. The line 15 is maintained above this potential by the voltage $V_{cc}$. This is maintained at a small potential which is dependent on the voltage divider R1,R2, and acts as the trip point for the signal applied to the gate 38. The gate 38 is also at earth potential at this time so that the FET F1 is off. A 0.7 volt drop appears across the diode D1.

When communication begins the positive pulses on the line 30 from the communicating device 22 cause the gate 38 to follow the turning on of the FET F1 at every positive pulse. When the FET F1 is turned on the voltage across the diode D1 is shorted out and applied as an increase in voltage at the transmitter 10. The interface at the transmitter receives the pulse and conditions it for the microprocessor (not shown) in the transmitter 10 to utilise.

A major advantage of the embodiment of the present invention described above is that communication can be achieved while the transmitter is still on-line with a controller. This is possible because there is no effect on the current in the loop. Communication is established by monitoring a voltage on the loop.

Another advantage is that the interface is powered by using a request to send line from an RS-232C port of the operator's communicating device 22. No extra power supply is necessary.

## CLAIMS

1. An on-line serial communication interface for interfacing between a digital circuit (22) operable to generate voltage pulses and a current loop comprising lines (12,14) for connecting a transmitter (10) to a power supply (16) to drain current from the power supply according to a process variable sensed by the transmitter, the interface comprising:

a diode (D1) connected in series in one of the lines (14) of the current loop for establishing a voltage drop across the diode;

a field effect transistor (F1) having a source and drain (34,36) connected in parallel with the diode (D1), the field effect transistor (F1) having a gate (38) for receiving a voltage to render the field effect transistor conductive between its source and drain to short the diode (D1) to prevent it from applying its voltage drop to the one line (14); and

a differential amplifier (32) having an output connected to the gate (38) of the field effect transistor, and two inputs, one of the inputs of the amplifier (32) being connected to the digital circuit (22) for receiving the generated voltage pulses and the other input of the amplifier (32) being connected or connectable to a selected voltage ($V_{cc}$) whereby the amplifier output develops voltage pulses in synchronism with the generated voltage pulses from the digital circuit to render the field effect transistor (F1) conductive and non-conductive in synchronism with the voltage pulses.

2. An interface according to claim 1, for interfacing with a said digital circuit (22) which comprises a computer.

3. An interface according to claim 1, for interfacing with a said digital circuit (22) which comprises a hand held terminal.

4. An interface according to claim 1, claim 2 or claim 3, for interfacing with a said current loop that has a first line (12) for connecting positive terminals of the transmitter (10) and power supply (16) and a second line (14) for connecting negative terminals of the transmitter (10) and the power supply (16), wherein the diode (D1) is connected in the negative line (14).

5. An interface according to any one of the preceding claims, including a voltage divider (R1,R2) connected or connectable between the selected voltage ($V_{cc}$) and the other input of the amplifier (32) for applying a small positive potential to the other input of the amplifier (32).

6. An interface according to claim 5, for interfacing with a said digital circuit that comprises a communicating device (22) operative to generate positive voltage pulses when it is active and to generate an earth signal when it is not active, the interface being so arranged that the earth signal is applied to the one input of the amplifier (32) for establishing an earth signal on the output of the amplifier to render the field effect transistor (F1) non-conductive so that a voltage drop appears across the diode (D1).

0213768

## FIG. 1

## FIG. 2

24 (COMMUNICATION INTERFACE)